# EUROPEAN PATENT SPECIFICATION

(11) **EP 3 909 738 B1**
(45) Date of publication and mention of the grant of the patent: **23.07.2025**
(21) Application number: 20173915.8
(22) Date of filing: 11.05.2020
(51) Int. Cl.: B29C 45/00, B29C 45/14, H02B 13/035, B29L 31/34, H02G 5/06

(54) **METHOD FOR PRODUCING AN INSULATOR FOR GAS INSULATED SWITCHGEAR AND INSULATOR FOR GAS INSULATED SWITCHGEAR**
VERFAHREN ZUR HERSTELLUNG EINES ISOLATORS FÜR GASISOLIERTE SCHALTANLAGE UND ISOLATOR FÜR GASISOLIERTE SCHALTANLAGE
PROCÉDÉ DE PRODUCTION D'UN ISOLANT POUR APPAREILLAGE DE COMMUTATION À ISOLATION GAZEUSE ET ISOLATEUR POUR APPAREILLAGE DE COMMUTATION À ISOLATION GAZEUSE

(43) Date of publication of application: 17.11.2021
(73) Proprietor: Hitachi Energy Ltd, 8050 Zürich (CH)
(72) Inventor: BEDNAROWSKI, Dariusz, 31-952 Krakow (PL); PLATEK, Robert, 32-400 Myslenice, Lesser (PL); MALINOWSKI, Lukasz, 30-504 Krakow (PL)
(74) Representative: Michalski Hüttermann & Partner Patentanwälte mbB

(56) References cited:
- JP-A- 2000 000 836
- JP-A- 2004 104 897
- JP-A- H05 337 990
- US-A1- 2014 174 787
- JEONG DONG HOON ET AL: "Development of Thermoplastic Materials for the Application of Eco-friendly", 2019 5TH INTERNATIONAL CONFERENCE ON ELECTRIC POWER EQUIPMENT - SWITCHING TECHNOLOGY (ICEPE-ST), IEEE, 13 October 2019 (2019-10-13), pages 476 - 479, XP033672360, DOI: 10.1109/ICEPE-ST.2019.8928899
- S FELLAHI ET AL: "Weldlines in injection-molded parts: A review", ADVANCES IN POLYMER TECHNOLOGY, 1 January 1995 (1995-01-01), New York, pages 169 - 195, XP055733390, Retrieved from the Internet <URL:https://onlinelibrary.wiley.com/doi/pdfdirect/10.1002/adv.1995.060140302> [retrieved on 20200923], DOI: 10.1002/adv.1995.060140302
- WASCHITSCHEK K ET AL: "Influence of push-pull injection moulding on fibres and matrix of fibre reinforced polypropylene", COMPOSITES PART A: APPLIED SCIENCE AND MANUFACTURING, ELSEVIER, AMSTERDAM, NL, vol. 33, no. 5, 1 May 2002 (2002-05-01), pages 735 - 744, XP004349507, ISSN: 1359-835X, DOI: 10.1016/S1359-835X(02)00007-6
- IBAR J P: "CONTROL OF POLYMER PROPERTIES BY MELT VIBRATION TECHNOLOGY: A REVIEW", POLYMER ENGINEERING AND SCIENCE, BROOKFIELD CENTER, US, vol. 38, no. 1, 1 January 1998 (1998-01-01), pages 1 - 20, XP000848898, ISSN: 0032-3888, DOI: 10.1002/PEN.10161
- INES KÜHNERT: "Grenzflächen beim Mehrkunststoffspritzgießen", DISSERTATION, 1 January 2005 (2005-01-01), https://nbn-resolving.org/urn:nbn:de:swb:ch1-200501667, XP055733490, Retrieved from the Internet <URL:https://nbn-resolving.org/urn:nbn:de:swb:ch1-200501667> [retrieved on 20200923]

## Description

### FIELD OF THE INVENTION

Aspects of the invention relate to a method for producing an insulator for gas insulated switchgear, which may particularly be used for medium or high voltage switchgear. Further aspects relate to an insulator for gas insulated switchgear.

### BACKGROUND OF THE INVENTION

A gas insulated device, and in particular a gas insulated switchgear, is an apparatus which usually comprises a metal enclosure which is filled with an insulating gas (dielectric gas), and which accommodates a typically conductor. The metal enclosure filled with insulating gas shields and insulates the conductor from other components and from the outside.

In order to position and hold the conductor firmly inside the apparatus volume such that contact of the conductor with the metal enclosure is prevented, an insulator is provided inside the gas filled enclosure. More particular, the insulator is secured to the enclosure and usually includes a central opening for accommodating the conductor. The insulator functions as a spacer between the conductor and the metal enclosure and avoids dielectric breakdown of the gas insulated switchgear.

In former years insulators for gas insulated switchgear have been formed of alumina filled epoxy resin. However, the epoxy resin, which has good electrical insulating properties and high mechanical strength, tends to get brittle which may cause unwanted sudden failure when applying extremely high load to the gas insulated device. In addition, epoxy materials are not environment friendly.

Jeong Dong Hoon et al. describe "Development of Thermoplastic Materials for the Application of Eco-friendly" in 2019 5th International conference on electric power equipment - switching technology, IEEE, pages 476 - 479, DOI: http://dx.doi.org/10.1109/ICEPE-ST.2019.8928899.

S. Fellahi et al. describe "Weldlines in injection-molded parts: A review" in Advances in Polymer Technology, New York, DOI: http://dx.doi.org/10.1002/adv.1995.060140302.

In order to overcome the disadvantages of the use of epoxy resins, JP 2004-104897 A suggested producing a spacer for a gas insulated electrical apparatus using thermoplastic resin which can be easily recycled. In order to achieve this object, an insulation body of the spacer is divided into a plurality of layers, wherein each of the plurality of layers is formed of a thermoplastic resin. After production of the plurality of layers of thermoplastic resin, the layers are integrally joined by adhesion, fitting, or fusing. The jointed insulation body showed high mechanical strength and stability and due to the ductility of the thermoplastic material, brittleness could be avoided. However, the manufacturing process, which is complex and cost intensive, bears the further disadvantage that the formation of the joint between the separate thermoplastic layers may not be sufficiently stable for long-term use of the gas insulated electrical apparatus.

### SUMMARY OF THE INVENTION

In order to overcome or at least mitigate the above captioned drawbacks, the present invention provides a method for producing an insulator for gas insulated switchgear by injection molding a thermoplastic resin and an insulator for gas insulated switchgear according to the independent claims, which may particularly be made using the method described herein.

According to the aspects of the present invention, the insulator for gas insulated switchgear is particularly used for medium and high voltage devices. Hereinafter, the term high voltage is understood as a rated nominal rms voltage of the gas insulated electric device of at least 1 kV, preferably of at least 52 kV.

The form and shape of the insulator is not particularly limited. It may have a disc-like shape including a central opening in which a conductor may be positioned or inlayed. The insulator may, in particular, support the conductor, e.g., in a co-axial central position of the insulator. However, other forms are also possible. The insulator may further comprise armor, like e.g. a metal ring formed on the outer circumference of the insulator.

In view of reducing the environmental impact, the insulator for gas insulated switchgear according to the aspects of the present invention includes a thermoplastic material, such as a thermoplastic resin. The thermoplastic resin is not particularly limited and may comprise only one thermoplastic resin or a combination of two or more thermoplastic resins, wherein the thermoplastic resins may be of the same resin type, i.e. particularly including the same monomer or monomers, or may be of different resin types and may, if not differing in the type, differ for example in the chain length, the chain structure or at least in the melting point, softening point, or glass transition temperature.

Hereinafter the term thermoplastic resin relates to a resin material which melts or at least becomes pliable or moldable in a certain temperature range and may then be deformed in a thermoplastic manner. After reconsolidation by cooling below the certain temperature range, the resin solidifies and settles in its new form.

Non-limiting examples of suitable thermoplastic resins which may be used according to the aspects of the present invention include acrylic resins, polyamides, polylactic acid, polybenzimidazole, polycarbonate, polyether sulfone, polyoxymethylene, polyether etherketone, polyetherimide, polyethylene, polypropylene, polyphenylene sulfide, polyphenylene oxide, polystyrene, polyvinyl chloride, polyvinylidene fluoride, polybutylene terephthalate and polytetrafluorethylene. The thermoplastic resins may be used singly or in combination, wherein the addition of additives for injection molding of thermoplastic resin is also possible.

The method for producing an insulator for gas insulated switchgear according to an aspect of the invention includes injection molding a thermoplastic resin. Injection molding of thermoplastic resin is favorable in view of time efficiency of the method. In addition, injection molding is a reliable technique which obtains the insulator reproducibly in precise form and shape.

The method particularly includes two main steps, i.e. a filling step of filling a cavity of a mold with molten thermoplastic resin and a packing step of packing the thermoplastic resin in the mold under controlled pressure.

In order to fill the cavity with thermoplastic resin during the filling step, the thermoplastic resin may be liquefied. In this regard, the thermoplastic resin may e.g. be supplied from a storage or tank or pretreatment unit. The thermoplastic resin is then introduced into the cavity via at least a first inlet opening group and a second inlet opening group.

This means that at least two inlet opening groups are provided, a first inlet opening group and a second inlet opening group. However, there may be more than these first and second inlet opening groups, wherein the number of inlet opening groups is not limited in any way.

Each inlet opening group may comprise at least one (inlet) opening to the cavity through which thermoplastic resin is introduced into the cavity. Accordingly, an opening herein particularly means an injection inlet opening into the cavity, like e.g. an injection nozzle or the like. In particular, the first inlet opening group may comprise one or more first opening(s) and the second inlet opening group may comprise one or more second opening(s). The number of openings in each of the inlet opening groups is not particularly limited; furthermore, the number of openings in each of the inlet opening groups may be the same or may be different.

During the packing step, the thermoplastic resin gradually solidifies and may shrink so that further thermoplastic material is introduced into the cavity to fill the volume of the cavity almost completely.

The packing step includes a specific sequence of packing sub-process steps which means that at least the following packing sub-process steps are carried out in this order:
A first packing sub-process step is performed, during which at a (predetermined) time t₀ a first pressure of the first inlet opening group is reduced relative to a second pressure of the second inlet opening group, so that the first pressure is lower than the second pressure, and can also be zero. The reduction of the first pressure particularly has the consequence that relative to the case of non-reduced first pressure less or even no further thermoplastic resin is introduced into the cavity via the first inlet opening group. This can be achieved by respectively controlling e.g. a pressure (control) valve or by partially or fully closing a flow (control) valve so that only a reduced amount of thermoplastic resin or no thermoplastic resin any longer is able to flow through the first inlet opening group into the cavity.

In case the first inlet opening group includes more than one first opening, the pressure reduction of the first pressure at the predetermined time t₀ is analogous and may even be identical for all first openings belonging to the first inlet opening group. Thus, all first opening(s) of the first inlet opening group have respective first pressure(s), each of which is reduced relative to the second pressure of any second opening of the second inlet opening group. According to an aspect, the pressure of each (first, second) inlet opening group may be jointly controlled, e.g., by a respective (first, second) supply manifold connected to the inlet opening(s) of the respective inlet opening group and being supplied through a manifold valve.

Therefore, the flow of thermoplastic resin from the first inlet opening group into the cavity is reduced effectively, while thermoplastic resin still flows through the second inlet opening group into the cavity.

In case of more than two inlet opening groups, the first packing sub-process step is carried out in a manner that at the predetermined time t₀ the pressure of at least one inlet opening group, but possibly of more than one inlet opening group but not of all inlet opening groups, is reduced relative to a second pressure of at least another, but possibly also more than one inlet opening group.

The predetermined time t₀ may optionally be set depending on the degree of filling of the cavity with thermoplastic resin and may exemplarily be set at a degree of filling of the cavity of at least 50 % by volume, preferably of at least 80 % by volume, more preferably of at least 90 % by volume or even more preferably of at least 95 % by volume or higher. The time t₀ may alternatively or additionally be set depending on the pressure in the interior of the cavity, which can be measured using respective sensors.

During a second packing sub-process step, which is carried out at a (predetermined) time t₁, which is later in time relative to the time t₀, the second pressure of the second inlet opening group is reduced relative to the first pressure of the first inlet opening group, so that the first pressure is higher than the second pressure. The delay in time may be set arbitrarily but is preferably within a range of up to 15 minutes and more preferably at least 0.2 seconds. It is more preferable that the delay in time is 0.5 second up to 10 minutes and even more preferable 0.6 second up to 5 minutes.

For example, this process control may be in accordance with at least one of the following:
- In case the first pressure of the first inlet opening group at the predetermined time t₀ is reduced but not zero so that thermoplastic resin still enters the cavity via the first inlet opening group, the second pressure of the second inlet opening group may be reduced to an even lower pressure or to zero in order to achieve the required pressure relation of the second pressure being lower than the first pressure or the other way around, the first pressure being higher than the second pressure.
- In case the first pressure of the first inlet opening group at the predetermined time t₀ is reduced to zero, the first pressure of the first inlet opening group may be increased again prior to reducing the second pressure or at the same time of reducing the second pressure in the second inlet opening group so that the first pressure of the first inlet opening group at the predetermined time t₁ is higher than the second pressure of the second inlet opening group, which may also be reduced to zero.

The second case may be favored in view of a faster filling of the cavity with thermoplastic resin.

In case of two or more openings of one specific inlet opening group, the openings of one inlet opening group are grouped such that the applied pressure reduction or pressure increase has an impact to the same extent on each of the openings of the respective inlet opening group.

The effects achieved by this process control can, without being bound by the theory, particularly be described as follows:
Prior to carrying out the first packing sub-process step, the thermoplastic resin flows into the cavity through the first inlet opening group and the second inlet opening group. Upon filling of the volume of the cavity, a first flow front of the thermoplastic resin entering the cavity through the first inlet opening group and a second flow front of thermoplastic resin entering the cavity through the second inlet opening group converge. This would usually lead to straight weld lines having reduced mechanical strength after solidification of the thermoplastic resin.

However, when during the packing step, the first packing sub-process step is carried out at a predetermined time t₀, thermoplastic resin still flows unreduced into the cavity via the second inlet opening group. The portions of thermoplastic resin introduced via the first inlet opening group, slowdown in movement and start solidifying particularly in those parts of the thermoplastic resin, which contact the inner surface of the cavity, in particular, when the cavity is cooled. Due to the solidification and reduction of the first pressure of the first inlet opening group, the thermoplastic resin which has been introduced via the first inlet opening group, is hindered in its movement. However, the second pressure of the second inlet opening group is maintained so that the first pressure is lower than the second pressure. As a consequence, further thermoplastic resin flows unhindered into the cavity via the second inlet opening group. Thus, the second flow front presses against the partially solidified first flow front. Accordingly, those parts of the first flow front, which are still liquid and flowable, shift and in other words avoid the confrontation by moving aside or backwards. More particular, the second flow front pushes the first flow front backwards so that the former straight interface of the confronting first and second flow fronts forms a curved shape.

During the packing step, solidification of the thermoplastic resin progresses so that at the predetermined time t₁, when the second packing sub-process step is carried out, i.e. when the second pressure of the second inlet opening group is reduced relative to the first pressure of the first inlet opening group, so that the first pressure is higher than the second pressure, also thermoplastic resin introduced via the second inlet opening group solidifies. However, since the first pressure is now higher than the second pressure, further thermoplastic resin of the first inlet opening group is forced to flow into the cavity and pushes against the confronting flow fronts. Since due to the reduced second pressure, the thermoplastic resin introduced via the second inlet opening group moves, if at all, with reduced velocity, still liquid and flowable parts of the second flow front are now pushed backwards or aside. This leads to the formation of a further curve within the first curve formed by the second flow front during the first packing sub-process step. This second curve is directed into another or more particular opposite direction relative to the first curve depending on the flow direction of the flow fronts.

At least, the carrying out of the first packing sub-process step and the second packing sub- process step in this sequence leads to the formation of a curved interface of the flow fronts, which, after solidification of the thermoplastic resin, results in a curved weld line of engaging curves resulting from the flow front of the thermoplastic resin introduced into the cavity via the first inlet opening group (first flow front) and the flow front of the thermoplastic resin introduced into the cavity via the second inlet opening group (second flow front). This more or less irregularly shaped and curved weld line improves the mechanical properties and in particular the mechanical strength of the finally obtained insulator for gas insulated switchgear due to toothing of the former flow fronts.

Optionally, the first packing sub-process step and the second packing sub- process step (and possibly further packing sub-process step(s)) are carried out alternatingly in a repeated manner, e.g., with each of the packing sub-process steps being carried out at least 3 times or even at least 5 times.

The method can comprise further steps, if necessary, like e.g. heating and cooling steps, opening and closing steps of the cavity and ejection of the obtained product out off the cavity.

According to a further aspect the sequence of the first packing sub-process step and the second packing sub-process step is repeated at further predetermined times tₓ, wherein each subsequent sequence is delayed in time relative to the respective previous sequence. This means in other words that the first pressure and the second pressure are alternately respectively higher or respectively lower. The predetermined times tₓ can be set arbitrarily. Moreover, the time delay between two successive sequences can be the same or can be different. More particular, the time delay between two successive sequences can preferably range from 0.5 second to 5 minutes, more preferable from 1 second up to 1 minute and even more preferable from 1 second up to 45 seconds.

As already outlined for one sequence above, each time the first packing sub-process step is carried out, the second flow front pushes against the first flow front and the first flow front moves backwards or aside so that a curve is formed by the second flow front in the first flow front. Furthermore, each time the second packing sub-process step is carried out, the first flow front pushes against the second flow front and the second flow front moves backwards or aside so that the first flow front forms a curve in the second flow front. This alternate movement produces further curves in the interface of the flow fronts so that the toothing of flow fronts is improved, whereby higher mechanical strength can be obtained in the weld line obtained after solidification of the thermoplastic resin. Accordingly, an insulator for gas insulated switchgear having further improved mechanical strength can be produced. In addition, such highly curved weld line also improves the surfaces appearance of the weld line and thus, the aesthetics of the insulator.

According to a further aspect, in the first packing sub-process step, the first pressure of the first inlet opening group is reduced to 0 Pa. This allows the second flow front to shift the first flow front to a maximum extent since no thermoplastic resin is introduced into the cavity via the first inlet opening group and the first flow front does essentially not move at this time. Accordingly, the curve formed by the push of the second flow front against the first flow front has a high amplitude, whereby the toothing of the flow fronts can be improved which, in turn increases the mechanical strength of the weld line obtained after solidification of the thermoplastic resin.

For the same reasons as outlined above, a further aspect of the present invention is characterized in that in the second packing sub-process step, the second pressure of the second inlet opening group is reduced to 0 Pa.

According to a further aspect, the first inlet opening group includes a plurality of first openings and the second inlet opening group includes a plurality of second openings. The first openings and second openings are positioned alternately along an outer circumference of the cavity. Herein, the circumference of the cavity is an enclosing boundary along the inner surface of the curved cavity and can be defined in any arbitrary direction. The alternate arrangement of the first and second openings facilitates the formation of a curved weld line, in particular, when all first openings are pressure controlled at the same time and all second openings are pressure controlled at another same time. The alternate arrangement provides flow fronts between each adjacent first opening and second opening so that carrying out the first and second packing sub-process steps produces a plurality of flow front interfaces having multiple interlocking curves. This further increases the mechanical strength of the resulting insulator.

According to another aspect of the invention, the cavity has an - for example essentially circular - outer circumference about a center axis, and an axial length smaller than a radius, and preferably has an essentially cylindrical shape. This shape of the cavity results in the production of an essentially cylindrical or more preferably disc-shaped insulator for gas insulated switchgear, which, due to its high volume relative to its small surface, provides excellent insulating properties. In addition, it contributes to an easy arrangement or positioning of a conductor in a center position of the insulator, so that the conductor can be positioned sufficiently far away from the outer surface of the insulator, which in general, is in contact with an enclosure. Thereby the likelihood of electric breakdown can be reduced effectively.

According to a further aspect, the first inlet opening group includes a plurality of first openings and the second inlet opening group includes a plurality of second openings. The first openings and second openings are positioned alternately along a longitudinal direction of the cavity. This arrangement of first and second openings is particularly advantageous when providing the cavity in form of a cylinder. Herein, the longitudinal direction means a line parallel to the cylinder axis of the cavity which is also referred to as the central axis of the cylinder. By positioning the first and second openings alternately along a longitudinal direction of the cavity, on the one hand, the cavity can be filled very quickly so that the process time can be reduced and costs of the insulator can be lowered. On the other hand, the alternate positioning improves the mechanical stability of the insulator by producing multiply curved weld lines which interlock strongly.

According to a further aspect, in the first packing sub-process step and in the second packing sub-process step, all first openings are controlled at the first pressure and all second openings are controlled at the second pressure. This process management facilitates the control of the resin flow such that a plurality of multiply curved interfaces of flow fronts is formed which results in the formation of highly curved weld lines showing interlocking teeth of thermoplastic resin prior introduced into the cavity via the first and second openings. In this regard, it is again pointed out that between each adjacent first and second openings curved interfaces of flow fronts are formed.

According to a further aspect of the invention, an injection molded insulator for gas insulated switchgear is described.

All definitions, embodiments, and advantageous effects described in view of the aspects relating to the method for producing an insulator for gas insulated switch gear can be applied to the injection molded insulator for gas insulated switchgear according to aspects of the present invention. Moreover, the insulator for gas insulated switchgear can be produced according to the method for producing an insulator for gas insulated switchgear by injection molding a thermoplastic resin described in detail above.

The insulator comprises a thermoplastic resin. The thermoplastic resin includes at least one weld line in a cross-sectional view of the insulator. Contrary to prior art insulators, the weld line has a curved shape such that a ratio L/S of a length L of the weld line having a starting point and an end point at respective (opposite) sides of the insulator to a length S of a straight line formed between the starting point and the end point is at least 1.3. The form of the weld line is not particularly limited but includes at least one curve which results in a weld line having a C-shape. However, from the viewpoint of mechanical strength of the weld line, the weld line includes a plurality of curves still under the precondition that L/S is at least 1.3.

The following explanations are given as a non-limiting example of the ratio L/S:
Assuming a first weld line having a L/S ratio of 1.3, wherein the weld line contains only one single curve and further assuming in comparison thereto a second weld line having the same L/S ratio of 1.3 but comprising a plurality of curves, the only one single curve of the first weld line consequently has an amplitude lager than any of the plurality of curves of the second weld line. Moreover, the sum of the amplitudes of each of the plurality of curves is similar to the amplitude of the only one single curve.

However, the interlocking of a plurality of teeth-like curves, even when the amplitude of the curves is small, significantly improves the mechanical strength of the weld line. In this regard, it was found that a ratio L/S of at least 1.3 greatly improves the mechanical strength of the weld line so that an insulator having high stability against mechanical impact is obtained.

From the view point of improved mechanical stability of the weld line, an aspect of the invention foresees that the ratio L/S as captioned above, is at least 1.5.

According to an aspect, the amplitude of each of the curves of the weld line is preferably at least about 10% of the thickness of the insulator measured from a starting point to an end point at respective opposite sides of the insulator. This contributes to an improved toothing of the curves of the weld line, which in turn increases the mechanical strength of the weld line.

According to another aspect, it is advantageous that when a height of a curve of the weld line at the highest point of the curve, measured from a base line formed at the bottom of the curve is t and a length D of a straight line formed between a starting point and an end point of the curve the following relation is fulfilled:
t > 10% of D.

The above relation guarantees a preferable minimum height of the curves so that an effective toothing can be achieved.

According to a further aspect an area below all curves of the weld line, measured above a straight line formed between a starting point and an end point of the weld line, is at least 25 µm², preferably at least 40 µm² and more preferably at least 50 µm². By having an area within these limits, a weld line comprising distinct curves is formed so that an interlocking of the curves is possible to a high extent.

In order to improve the mechanical stability of the insulator, according to an aspect of the invention the thermoplastic resin contains a reinforcing material. The reinforcing material is not particularly limited and may include particulate, laminar or fibrous materials, wherein also a combination of these materials is possible.

In view of light weight and high mechanical stability, fibrous materials are particularly preferred. However, neither the composition of the fibers nor the arrangement of the fibers is particularly limited. Non-limiting examples of suitable fibers include carbon fibers, glass fibers, aramid fibers, kevlar fibers, basalt fibers, cellulose-based fibers, polyethylene (PE, in particular HDPE) fibers, polypropylene (PP) fibers, acrylonitrile butadiene styrol (ABS) fibers, polylactide (PLA) fibers and polyphenylene sulfide fibers. The fibers may be in form of strands of fibers, may be chopped or un-chopped or may be woven or nonwoven and may preferably be in form of a net, fleece or web. Particularly suitable fiber length range from, 50 µm to 200 µm for short fibers and from 10 mm to 12 mm for long fibers.

### BRIEF DESCRIPTION OF THE DRAWINGS

The herein described invention will be more fully understood from the detailed description given herein below and the accompanying drawings, which should not be considered limiting to the invention described in the appended claims. In the drawings, merely the essential features of the aspects of the invention are shown, all other features are omitted for clarity reasons. In addition, the same reference signs relate to the same components or elements.
Fig. 1 is a flowchart of a method for producing an insulator for gas insulated switchgear by injection molding a thermoplastic resin according to a first aspect of the invention;
Fig. 2 is a schematic view representing the formation of curved weld lines according to a second aspect of the invention;
Fig. 3 is a schematic sectional view of an insulator for gas insulated switch gear according to a third aspect of the invention; and
Fig. 4 is an enlarged view of one of the weld lines shown in Fig. 3.

### DETAILED DESCRIPTION

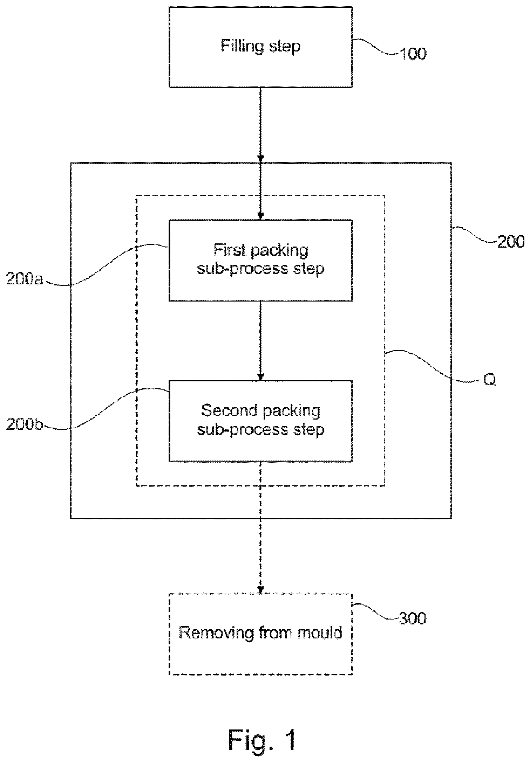

In detail, Fig. 1 shows methods steps for producing an insulator for gas insulated switchgear. The method includes injection molding a thermoplastic resin using an injection molding apparatus. Such injection molding apparatus usually comprises a first mold and a second mold, wherein a cavity is provided between these two molds. The cavity has the negative shape of the insulator to be produced. According to one embodiment, the cavity may be empty, which means that the insulator, after completion of the method, is ejected from the cavity as one single component. However, the cavity may include other components, such as, for example, a conductor (e.g., a high-voltage conductor rated for a voltage of at least 1 kV). In this case, when molding the insulator, the insulator and the conductor together form an integrated component.

According to a first step, a filling step 100 of filling the cavity with molten or at least liquefied thermoplastic is carried out. The molten thermoplastic resin is introduced into the cavity via at least a first inlet opening group and a second inlet opening group. Further inlet opening groups may be provided. The inlet opening groups may contain one or more openings, such as for example injection nozzles, for introducing the thermoplastic resin into the cavity. In detail, the first inlet opening group may contain one or more first openings and the second inlet opening group may contain one or more second openings. During the filling step 100 the thermoplastic resin flows through the first and second openings into the cavity until the cavity is filled.

At a filling stage of the cavity of e.g. at least 80 % by volume or preferably at least 90 % by volume, the filling step 100 preferably continuously turns into a packing step 200. During the packing step 200, pressure control of the inlet opening groups is carried out in a specific manner as described below.

In particular, a sequence Q of packing sub-process steps is carried out including a first packing sub-process step 200a, during which at a predetermined time t₀ a first pressure of the first inlet opening group is reduced relative to a second pressure of the second inlet opening group, so that the first pressure is lower than the second pressure. Since all first openings of the first inlet opening group are controlled similarly, the pressure of all first openings is reduced to the same extent so that the flow of thermoplastic resin through the first openings into the cavity is reduced which in turn means that due to the second pressure being higher than the first pressure, more thermoplastic resin then flows into the cavity via the second openings.

The predetermined time t₀ may for example be set in relation to the filling stage of the cavity or may for example be set time dependent on the start of the packing step 200.

At the stage of initiating the packing step 200, flow fronts resulting from introduction of molten thermoplastic resin flowing into the cavity from at least two different locations (at least one first opening and at least one second opening) have formed an interface. In other words, at least a first flow front resulting from the introduction of thermoplastic resin into the cavity via the first inlet opening group and at least a second flow front resulting from the introduction of thermoplastic resin into the cavity via the second inlet opening group form an interface of first and second flow fronts. However, this teaching should be understood such that further interfaces of flow fronts may be formed, resulting from the introduction of thermoplastic resin via more than one first opening of the first inlet opening group and more than one second opening of the second inlet opening group. In other words, wherever two flow fronts converge, an interface of flow fronts is formed.

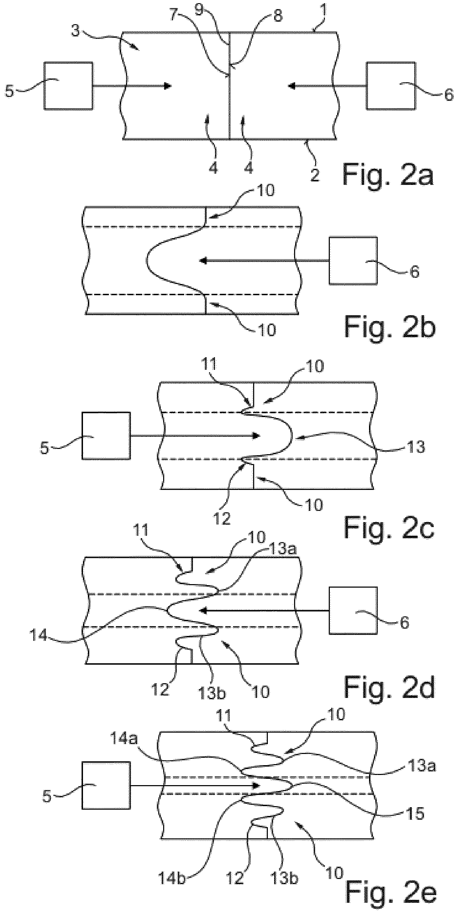

Accordingly, when during the first packing sub-process step 200a, thermoplastic resin is forced to flow into the cavity via the second inlet opening group, the second flow front pushes against the first flow front and forms a curve in the first flow front. A more detailed explanation of the formation of a curved interface of flow fronts is given with reference to Fig. 2 below. However, it should be understood from Fig. 1 that the pressure control of the first and second inlet opening groups influences the shape of the interface of flow fronts formed by solidifying thermoplastic resin.

Furthermore, at a predetermined time t₁, which is delayed in time relative to the predetermined time t₀, a second packing sub-process step 200b is carried out. The delay in time can be set for example depending on the filling stage of the cavity, or the pressure within the cavity, or may exemplarily be set in relation to the duration of the packing step 200.

In the second packing sub-process step 200b, the second pressure of the second inlet opening group is reduced relative to the first pressure of the first inlet opening group, so that the first pressure is higher than the second pressure. In order to achieve a first pressure being higher than the second pressure, as a further intermediate step, the pressure of the first inlet opening group may be increased again after the first packing sub-process step 200a. However, this is not necessary when during the first packing sub-process step 200a the first pressure has not been reduced to zero but only to a certain extent.

Due to the pressure control during the second packing sub-process step 200b, thermoplastic resin flows into the cavity predominantly via the first openings of the first inlet opening group. As a consequence, the first flow front now pushes against the second flow front, so that a further curve at the interface of the flow fronts is formed. This leads to the formation of interlocking flow fronts, which, after consolidation of the thermoplastic resin, forms a curved weld line. Such a curved weld line has higher mechanical stability, and in particular higher mechanical strength, than a straight weld line.

The interlocking of the confronting flow fronts and thus, the formation of a highly curved weld line can be increased by repeating the sequence Q of the first packing sub-process step 200a and the second packing sub-process step 200b at further predetermined times tₓ, wherein each subsequent sequence is delayed in time relative to the respective previous sequence. As an example, a further sequence can be started 1 to 10 seconds after finishing of the previous sequence.

After finishing of the packing step 200, final cooling of the thermoplastic resin may be performed and the produced insulator may be removed from the cavity.

A more detailed explanation regarding the formation of a curved interface of flow fronts and thus, of a curved weld line is given with respect to Fig. 2.

In Fig. 2a reference sign 1 refers to a first mold of an injection molding apparatus and reference sing 2 refers to a second mold of the injection molding apparatus. Between the first mold 1 and the second mold 2 a cavity 3 is formed. The cavity 3 has a shape which corresponds to the negative form of an insulator for gas insulated switch gear to be produced using an injection molding method as for example explained in view of Fig. 1.

From a first opening 5 of a first inlet opening group and a second opening 6 of a second inlet opening group molten thermoplastic resin 4 is introduced into the cavity 3. Fig. 2a shows a stage of the method for producing an insulator for gas insulated switch gear using injection molding, in which a filling step 200 is carried out. As an example, thermoplastic resin 4 flows into the cavity 3 via the first opening 5 and the second opening 6 with e.g. the same pressure, which means that a first pressure of the first inlet opening group and a second pressure of the second inlet opening group are the same. Accordingly, upon convergence of a first flow front 7 resulting from flow of thermoplastic resin 4 into the cavity 3 via the first opening 5, and a second flow front 8 resulting from flow of thermoplastic resin 4 into the cavity 3 via the second opening 6, a straight interface 9 of the first and second flow fronts 7, 8 is formed.

Fig. 2b shows the stage of packing step 200, in which a first packing sub-process step 200a is carried out. The packing step 200 in general means a pressure control step during which further thermoplastic resin 4 is introduced into the cavity 3 in order to fully fill the cavity 3 and compensate shrinkage of the thermoplastic resin 4 due to solidification thereof. It can be seen that at portions close to the inner mold surfaces of first and second molds 1 and 2, which in general may have a temperature lower than the melting temperature of the thermoplastic resin, solidified portions 10 of thermoplastic resin are formed. These portions 10 of thermoplastic resin are no longer movable and the interface 9 of the first and second flow fronts 1, 2 is fixed.

Accordingly, when carrying out the first packing sub-process step 200a, during which at a predetermined time t₀ a first pressure of the first inlet opening group is reduced relative to a second pressure of the second inlet opening group, so that the first pressure is lower than the second pressure, the interface 9 of the flow fronts is only movable in inner portions and not at portions 10 of solidified thermoplastic resin. Due to the second pressure being higher than the first pressure, thermoplastic resin 4 is now forced to flow into the cavity 3 via second opening 6. Accordingly, the thermoplastic resin 4 pushes the interface 9 of the first and second flow fronts 1, 2 into the flow direction of thermoplastic resin 4 introduced into the cavity 4 via the first opening 5. In other words, the first low front 7 is pushed backwards and a C-shaped curve is formed at the interface 9 of the flow fronts.

Referring now to Fig. 2c, it can be seen that the solidification of the thermoplastic resin 4 has progressed and the portion 10 of solidified thermoplastic resin at the interface 9 of the flow fronts has increased. At this stage, a second packing sub-process step 200b is initiated, during which at a predetermined time t₁, which is delayed in time relative to the predetermined time t₀, the second pressure of the second inlet opening group is reduced relative to the first pressure of the first inlet opening group. Accordingly, with a certain time delay, the second pressure is reduced such that the first pressure is higher than the second pressure. Now the thermoplastic resin 4 is forced to flow into the cavity 3 more from the first opening 5 than from the second opening 6 and still liquid portions of the flow fronts move into the direction of the thermoplastic resin 4 introduced into the cavity 3 from the second opening 6. Accordingly, the first flow front 7 pushes the second flow front 8 backwards so that another curve at the interface of the flow fronts is formed. After finishing of the second packing sub-process step 200b the interface of the flow fronts includes three curves, two smaller C-shaped curves 11 and 12 and one bigger C-shaped curve 13.

When carrying out one further sequence Q of first and second packing sub-process steps 200a, 200b at a predetermined time tₓ, and thus, delayed in time relative to the first previous sequence, further curves are formed in the same manner as explained for Figs. 2b and 2c. In more detail, referring to Fig. 2d, the solidification of the thermoplastic resin 4 further proceeds and the solidified portion 10 of thermoplastic resin 4 is further increased and merely an inner portion of thermoplastic resin 4 in the middle of the cavity 3 is still liquid enough to be moved.

Accordingly, when carrying out another first packing sub-process step 200a, thermoplastic resin 4 forced into the cavity from the second opening 6 again pushes against the first flow front 7 so that the first flow front 7 is pushed backwards and another C-shaped curve 14 is formed therein and the former C-shaped curve 13 is split into two smaller C-shaped curves 13a, 13b.

Fig. 2e shows a stage of the method at which a further second packing sub-process step is performed and thermoplastic resin 4 is again forced into the cavity 3 more via the first opening 5 since the second pressure of the second inlet opening group is reduced relative to the first pressure of the first inlet opening group, so that the first pressure is higher than the second pressure. Accordingly, the thermoplastic resin 4 pushes the still flowable portions of the inner most parts of the flow fronts towards the thermoplastic resin 4 introduced into the cavity via the second opening 6 so that another C-shaped curve 15 is formed at the interface of the flow fronts and the former C-shaped curve 14 is split into two smaller C-shaped curves 14a, 14b.

The sequence Q of first and second packing sub-process steps 200a and 200b can be repeated at predetermined times tₓ as long as portions of thermoplastic resin 4 are still liquid and thus, movable so that a desired curved interface of flow fronts and after solidification of the thermoplastic resin 4, a desired curved weld line of interlocking curves of solidified thermoplastic resin is obtained. These interlocking curves greatly improve mechanical strength of the weld line and thus, also of the insulator for gas insulated switch gear.

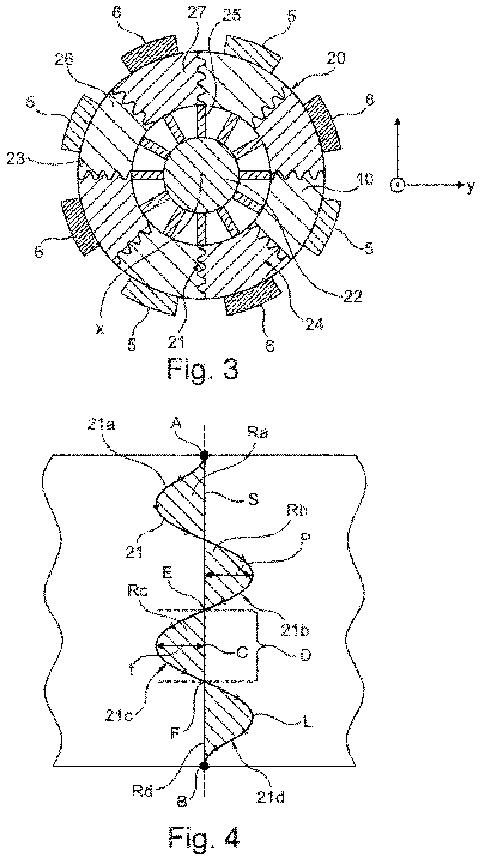

Fig. 3 is a schematic sectional view of an exemplary insulator 20 for gas insulated switch gear which is still included in a cavity of an injection molding apparatus. Fig. 3 is for illustrating the formation of curved weld lines 21 of solidified thermoplastic resin 10. The insulator 20 comprises a conductor 22 which is in a mounted position in a central opening of the insulator 20. The insulator has a disc shape and its longitudinal direction extends into the direction z. X represents the center of the insulator 20 through which, in the direction z the central axis (longitudinal axis) of the insulator 20 passes. Reference sign 23 denominates the circumference of the insulator 20.

Between the conductor 22 and an insulation portion 24 of solidified thermoplastic resin 10 reinforcement ribs 25 are provided.

Referring now to the insulation portion 24 of solidified resin 10, it can be seen that first sections 26 and second sections 27 of solidified thermoplastic resin are alternately arranged in the circumference direction of the insulator 20. Between first and second sections 26, 27 weld lines 21 are formed. The weld lines 21 have a curved shape of interlocking C-shaped curves and may be obtained by the method described with reference to Fig. 1 or Fig. 2.

Accordingly, molten thermoplastic resin may have been introduced into the cavity via first inlet opening groups and second inlet opening groups. In Fig. 3 four first openings 5 are shown, which belong to the first inlet opening group and four second openings 6 are shown, which belong to the second inlet opening group. The respective first and second openings 5, 6 are controlled similarly in order to perform a first packing sub-process step 200a and a second packing sub-process step 200b as described in view of Fig. 1 above. By regulating the pressure of the first and second inlet opening groups and thus, the flow of the thermoplastic resin during the packing step 200, the formation of curved weld lines 21 can be controlled. Due to the curved weld lines 21 the insulator 20 shows improved mechanical strength.

As example, the following process parameters are provided, which are suitable to obtain insulator 20 by the method described in Fig. 1 having curved weld lines as shown in Fig. 3:
As thermoplastic resin polyphenylene sulphide can be used, which includes e.g. 40 wt% glass fibers. The thermoplastic resin has a melting temperature of 320 °C. Overmolded metal insert is heated up to 80 °C and placed into the cavity before mold closing and thermoplastic material injection. The mold can be heated up to a temperature of about 150 °C so that the inner mold surface temperature can be kept at 150 °C. The filling time of the cavity during the filling step 100 could be set to 2.5 seconds. After 2.26 seconds, during the first packing sub-process step 200a, all four first openings 5 (which belong to a first inlet opening group) are closed. Thereby, the first pressure of all first openings 5 is reduced to zero MPa so that no thermoplastic resin continues flow through the first openings 5. However, thermoplastic resin still flows through the four second openings 6 (which belong to a second inlet opening group). Thereafter, a second packing sub-process step 200b is performed with the roles of the first and second group of openings inversed: The second openings 6 are closed so that the second pressure is reduced to zero and the first openings 5 are opened again and thermoplastic resin is introduced into the cavity again via the first openings 5 at a pressure of about 29 MPa for about 150 seconds. These first and second packing sub-process steps 200a, 200b may be carried out N times (i.e., each of the first and second packing sub-process steps 200a, 200b being carried out N times) until the cavity is fully filled.

The above process steps and parameters are provided only by means of example only and may be varied. Generally, the first and second packing sub-process steps are carried out alternatingly with the roles of the first and second openings of the first and second inlet opening groups inversed with respect to each other, N times (i.e., each of the first and second packing sub-process steps being carried out N times), with N ≥ 1 and preferably N ≥ 2, e.g., N=3, 4, 5 or more. Generally, the pressure difference between the first and second openings in each sub-packing step is at least 1 bar, preferably at least 5 bar, and particularly preferably at least 10 or even 15 bar.

Fig. 4 is an enlarged view of one of the weld lines 21 shown in Fig. 3. The weld line 21 comprises four curves 21a, 21b, 21c and 21d. L represents the length L of the weld line 21 which is taken along the arrowed line starting at starting point A and ending at end point B. The starting point A and the end point B are provided at opposite sides of the insulator 20. An imaginary straight line S may be formed starting at starting point A and ending at end point B. According to an aspect of the invention a ratio of the length L to the length S is at least 1.3 and preferably at least 1.5. Accordingly, the greater the ratio L/S, the more curved is the weld line 21 and the higher is the mechanical strength of the insulator 21 due to the toothing of curves 21a-d formed in the weld line 21.

Further preferably, the amplitude P of each of the curves 21a-d of the weld line 21 may preferably be at least 2 µm, more preferably at least 4 µm and even more preferably at least 5 µm but not greater than 10 mm, whereby the interlocking of the curves 21a-d of weld line 21 is further improved. The amplitude P is measured from a base line of each of the curves, which may correspond to the straight line having a length S.

A further advantageous embodiment is shown with reference to curve 21c. Accordingly, when a height of a curve 21c of the weld line 21 at the highest point of the curve 21c, and which is measured from a base line C formed at the bottom of the curve 21c is t, t and a length D of the straight line C formed between a starting point E and an end point F of the curve 21c fulfil the following relation:
t > 10% of D

The above relation is also an expression of the degree of curvature of the weld line 21. The larger t is, the more distinct is the respective curve.

According to a further aspect an area R of all areas Ra, Rb, Rc and Rd below respective curves 21a-d of the weld line 21 can be obtained. It is advantageous when R is at least 25 µm², preferably at least 40 µm² and more preferably at least 50 µm². By having an area within these limits, a weld line comprising distinct curves is formed so that an interlocking of the curves is possible to a very high extent. The respective areas Ra-d are measured above a straight line formed between starting point A and end point B of the weld line 21. When the area R is at least 25 µm², curves are formed in the weld line 21 which improve the mechanical stability of the insulator 20.

### LIST OF DESIGNATIONS

- 1: first mold
- 2: second mold
- 3: cavity
- 4: thermoplastic resin
- 5: first opening
- 6: second opening
- 7: first flow front
- 8: second flow front
- 9: interface of flow fronts
- 10: portion of solidified thermoplastic resin
- 11: C-shaped curve
- 12: C-shaped curve
- 13: C-shaped curve
- 13a: C-shaped curve
- 13b: C-shaped curve
- 14: C-shaped curve
- 14a: C-shaped curve
- 14b: C-shaped curve
- 15: C-shaped curve
- 20: insulator
- 21: weld line
- 21a: curve in weld line
- 21b: curve in weld line
- 21c: curve in weld line
- 21d: curve in weld line
- 22: conductor
- 23: circumference of the insulator
- 24: insulating portion
- 25: reinforcement rib
- 26: first section of solidified thermoplastic resin
- 27: second section of solidified thermoplastic resin
- A: starting point of weld line
- B: end point of weld line
- C: base line of curve 21c
- D: Length of base line C
- E: starting point of base line C
- F: end point of base line C
- L: length of weld line
- P: amplitude of curve
- Q: sequence of packing sub-process steps
- R: sum of areas Ra to Rd
- Ra: area of curve 21a
- Rb: area of curve 21b
- Rc: area of curve 21c
- Rd: area of curve 21d
- S: length of straight line between A and B
- X: central axis of insulator

## Claims

1. Method for producing an insulator for gas insulated switchgear (20) by injection molding a thermoplastic resin (4), the method including:
a filling step (100) of filling a cavity (3) of a mold (1, 2) with molten thermoplastic resin (4) and
a packing step (200) of packing the thermoplastic resin (4) in the mold (1, 2) under controlled pressure, wherein
the molten thermoplastic resin (4) is introduced into the cavity (3) via at least a first inlet opening group, **characterized in that**
the molten thermoplastic resin (4) is introduced into the cavity (3) via at least the first inlet opening group and a second inlet opening group,
the packing step (200) includes in this sequence (Q):
a first packing sub-process step (200a), during which at a predetermined time t₀ a first pressure of the first inlet opening group is reduced relative to a second pressure of the second inlet opening group, so that the first pressure is lower than the second pressure; and
a second packing sub-process step (200b), during which at a predetermined time t₁ which is delayed in time relative to the predetermined time t₀, the second pressure of the second inlet opening group is reduced relative to the first pressure of the first inlet opening group, so that the first pressure is higher than the second pressure; wherein
the sequence (Q) of the first packing sub-process step (200a) and the second packing sub-process step (200b) is repeated at further predetermined times tₓ, wherein each subsequent sequence (Q) is delayed in time relative to the respective previous sequence (Q).

2. The method of claim 1, wherein the further predetermined times tₓ, is at least 3 or at least 5 and/or wherein a time delay between two successive sequences (Q) is in the range from 0.5 seconds to 5 minutes, more preferable from 1 second up to 1 minute and even more preferable from 1 second up to 45 seconds.

3. The method of claim 1 or 2, wherein in the first packing sub-process step (200a), the first pressure of the first inlet opening group is reduced to 0 Pa.

4. The method of any of claims 1 to 3, wherein in the second packing sub-process step (200b), the second pressure of the second inlet opening group is reduced to 0 Pa.

5. The method of any of claims 1 to 4, wherein the first inlet opening group includes a plurality of first openings (5), wherein the second inlet opening group includes a plurality of second openings (6), and wherein first openings (5) and second openings (6) are positioned alternately along an outer circumference of the cavity (3).

6. The method of claim 5, wherein the cavity (3) has an essentially circular outer circumference about a center axis (X), and an axial length smaller than a radius of the cavity (3), and preferably has an essentially cylindrical shape.

7. The method of any of claims 1 to 6, wherein the first inlet opening group includes a plurality of first openings (5), wherein the second inlet opening group includes a plurality of second openings (6), and wherein first openings (5) and second openings (6) are positioned alternately along a longitudinal direction of the cavity (3).

8. The method of any of claims 5 to 7, wherein in the first packing sub-process step (200a) and in the second packing sub-process step (200b), all first openings (5) are controlled at the first pressure and wherein all second openings (6) are controlled at the second pressure.

9. Injection molded insulator for gas insulated switchgear (20), the insulator (20) comprising a thermoplastic resin (4), wherein the thermoplastic resin (4) includes at least one weld line (21) in a cross-sectional view of the insulator (20) which at least one weld line (21) has a curved shape such that a ratio of a length (L) of the weld line (21) having a starting point (A) and an end point (B) at respective sides of the insulator (20) to a length (S) of a straight line formed between the starting point (A) and the end point (B) is at least 1.3 and the at least one weld line (21) has a plurality of curves.

10. Injection molded insulator for gas insulated switchgear (20) according to claim 9, wherein the curved shape is such that the ratio of a length (L) of the weld line (21) having a starting point (A) and an end point (B) to a length (S) of a straight line formed between the starting point (A) and the end point (B) is at least 1.5.

11. Injection molded insulator for gas insulated switchgear (20) according to claim 9 or 10, wherein the thermoplastic resin (4) contains a reinforcing material.

12. Injection molded insulator for gas insulated switchgear (20) according to claim 11, wherein the reinforcing material is a fibrous material.

## Patentansprüche

1. Verfahren zur Herstellung eines Isolators für eine gasisolierte Schaltanlage (20) durch Spritzgießen eines thermoplastischen Harzes (4), wobei das Verfahren umfasst:
einen Füllschritt (100) zum Füllen einer Kavität (3) einer Form (1, 2) mit geschmolzenem thermoplastischem Harz (4) und
einen Druckhalteschritt (200) zum Halten des thermoplastischen Harzes (4) in der Form (1, 2) unter kontrolliertem Druck, wobei
das geschmolzene thermoplastische Harz (4) in die Kavität (3) über mindestens eine erste Einlauföffnungsgruppe eingeführt wird, **dadurch gekennzeichnet, dass**
das geschmolzene thermoplastische Harz (4) in die Kavität (3) über mindestens die erste Einlauföffnungsgruppe und eine zweite Einlauföffnungsgruppe eingeführt wird,
der Druckhalteschritt (200) in dieser Sequenz (Q) umfasst:
einen ersten Druckhalteteilprozessschritt (200a), in dem zu einem vorab bestimmten Zeitpunkt t₀ ein erster Druck der ersten Einlauföffnungsgruppe relativ zu einem zweiten Druck der zweiten Einlauföffnungsgruppe reduziert wird, sodass der erste Druck niedriger als der zweite Druck ist; und
einen zweiten Druckhalteteilprozessschritt (200b), in dem zu einem vorab bestimmten Zeitpunkt t₁, der in Bezug auf den vorab bestimmten Zeitpunkt t₀ zeitlich verzögert ist, der zweite Druck der zweiten Einlauföffnungsgruppe relativ zu dem ersten Druck der ersten Einlauföffnungsgruppe reduziert wird, sodass der erste Druck höher als der zweite Druck ist; wobei
die Sequenz (Q) des ersten Druckhalteteilprozessschritts (200a) und des zweiten Druckhalteteilprozessschritts (200b) zu weiteren vorab bestimmten Zeitpunkten tₓ wiederholt wird, wobei jede nachfolgende Sequenz (Q) in Bezug auf die jeweilige vorherige Sequenz (Q) zeitlich verzögert ist.

2. Verfahren nach Anspruch 1, wobei die weiteren vorab bestimmten Zeitpunkte tₓ mindestens 3 oder mindestens 5 sind und/oder wobei eine zeitliche Verzögerung zwischen zwei aufeinanderfolgenden Sequenzen (Q) im Bereich zwischen 0,5 Sekunden und 5 Minuten, bevorzugt zwischen 1 Sekunde bis zu 1 Minute und noch mehr bevorzugt zwischen 1 Sekunde bis zu 45 Sekunden liegt.

3. Verfahren nach Anspruch 1 oder 2, wobei in dem ersten Druckhalteteilprozessschritt (200a) der erste Druck der ersten Einlauföffnungsgruppe auf 0 Pa reduziert wird.

4. Verfahren nach einem der Ansprüche 1 bis 3, wobei in dem zweiten Druckhalteteilprozessschritt (200b) der zweite Druck der zweiten Einlauföffnungsgruppe auf 0 Pa reduziert wird.

5. Verfahren nach einem der Ansprüche 1 bis 4, wobei die erste Einlauföffnungsgruppe eine Vielzahl erster Öffnungen (5) umfasst, wobei die zweite Einlauföffnungsgruppe eine Vielzahl zweiter Öffnungen (6) umfasst und wobei erste Öffnungen (5) und zweite Öffnungen (6) abwechselnd entlang einem Außenumfang der Kavität (3) positioniert sind.

6. Verfahren nach Anspruch 5, wobei die Kavität (3) einen im Wesentlichen runden Außenumfang um eine Mittelachse (X) und eine axiale Länge, die kleiner als ein Radius der Kavität (3) ist, und bevorzugt eine im Wesentlichen zylindrische Form hat.

7. Verfahren nach einem der Ansprüche 1 bis 6, wobei die erste Einlauföffnungsgruppe eine Vielzahl erster Öffnungen (5) umfasst, wobei die zweite Einlauföffnungsgruppe eine Vielzahl zweiter Öffnungen (6) umfasst und wobei erste Öffnungen (5) und zweite Öffnungen (6) abwechselnd entlang einer Längsrichtung der Kavität (3) positioniert sind.

8. Verfahren nach einem der Ansprüche 5 bis 7, wobei in dem ersten Druckhalteteilprozessschritt (200a) und in dem zweiten Druckhalteteilprozessschritt (200b) alle ersten Öffnungen (5) mit dem ersten Druck gesteuert werden und wobei alle zweiten Öffnungen (6) mit dem zweiten Druck gesteuert werden.

9. Spritzgegossener Isolator für eine gasisolierte Schaltanlage (20), wobei der Isolator (20) ein thermoplastisches Harz (4) umfasst, wobei das thermoplastische Harz (4) mindestens eine Schweißnaht (21) in einer Schnittansicht des Isolators (20) einschließt, wobei diese mindestens eine Schweißnaht (21) eine gebogene Form in der Art hat, dass ein Verhältnis einer Länge (L) der Schweißnaht (21) mit einem Startpunkt (A) und einem Endpunkt (B) an jeweiligen Seiten des Isolators (20) zu einer Länge (S) einer geraden Linie zwischen dem Startpunkt (A) und dem Endpunkt (B) mindestens 1,3 ist und die mindestens eine Schweißnaht (21) eine Vielzahl von Bögen aufweist.

10. Spritzgegossener Isolator für eine gasisolierte Schaltanlage (20) nach Anspruch 9, wobei die gebogene Form sich so verhält, dass das Verhältnis einer Länge (L) der Schweißnaht (21) mit einem Startpunkt (A) und einem Endpunkt (B) zu einer Länge (S) einer geraden Linie zwischen dem Startpunkt (A) und dem Endpunkt (B) mindestens 1,5 ist.

11. Spritzgegossener Isolator für eine gasisolierte Schaltanlage (20) nach Anspruch 9 oder 10, wobei das thermoplastische Harz (4) verstärkendes Material enthält.

12. Spritzgegossener Isolator für eine gasisolierte Schaltanlage (20) nach Anspruch 11, wobei das verstärkende Material ein Fasermaterial ist.

## Revendications

1. Procédé de production d'un isolant pour un appareillage de commutation isolé des gaz (20) par moulage par injection d'une résine thermoplastique (4), le procédé incluant :
une étape de remplissage (100) consistant à remplir une cavité (3) d'un moule (1,2) avec une résine thermoplastique fondue (4) et
une étape de garnissage (200) consistant à garnir la résine thermoplastique (4) dans le moule (1, 2) sous une pression régulée, dans lequel
la résine thermoplastique fondue (4) est introduite dans la cavité (3) par l'intermédiaire d'au moins un premier groupe d'ouvertures d'entrée, **caractérisé en ce que**
la résine thermoplastique fondue (4) est introduite dans la cavité (3) par l'intermédiaire d'au moins le premier groupe d'ouvertures d'entrée et un second groupe d'ouvertures d'entrée,
l'étape de garnissage (200) inclut dans la séquence suivante (Q) :
une première sous-étape de processus de garnissage (200a), pendant laquelle à un temps prédéterminé t₀ une première pression du premier groupe d'ouvertures d'entrée est réduite par rapport à une seconde pression du second groupe d'ouvertures d'entrée, de telle sorte que la première pression est inférieure à la seconde pression ; et
une seconde sous-étape de processus de garnissage (200b), pendant laquelle à un temps prédéterminé t₁ qui est retardé dans le temps par rapport au temps prédéterminé t₀, la seconde pression du second groupe d'ouvertures d'entrée est réduite par rapport à la première pression du premier groupe d'ouvertures d'entrée, de telle sorte que la première pression est supérieure à la seconde pression ; dans lequel
la séquence (Q) de la première sous-étape de processus de garnissage (200a) et de la seconde sous-étape de processus de garnissage (200b) est répétée à des temps prédéterminés supplémentaires tₓ, dans lequel chaque séquence (Q) consécutive est retardée dans le temps par rapport à la séquence (Q) précédente respective.

2. Procédé selon la revendication 1, dans lequel les temps prédéterminés supplémentaires tₓ, sont au moins 3 ou au moins 5 et/ou dans lequel un retard temporel entre deux séquences (Q) successives est dans la plage de 0,5 seconde à 5 minutes, plus préférentiellement de 1 seconde jusqu'à 1 minute et encore plus préférentiellement de 1 seconde jusqu'à 45 secondes.

3. Procédé selon la revendication 1 ou 2, dans lequel dans la première sous-étape de processus de garnissage (200a), la première pression du premier groupe d'ouvertures d'entrée est réduite à 0 Pa.

4. Procédé selon l'une quelconque des revendications 1 à 3, dans lequel dans la seconde sous-étape de processus de garnissage (200b), la seconde pression du second groupe d'ouvertures d'entrée est réduite à 0 Pa.

5. Procédé selon l'une quelconque des revendications 1 à 4, dans lequel le premier groupe d'ouvertures d'entrée inclut une pluralité de premières ouvertures (5), dans lequel le second groupe d'ouvertures d'entrée inclut une pluralité de secondes ouvertures (6), et dans lequel les premières ouvertures (5) et les secondes ouvertures (6) sont positionnées de manière alternative le long d'une circonférence externe de la cavité (3).

6. Procédé selon la revendication 5, dans lequel la cavité (3) a une circonférence externe essentiellement circulaire autour d'un axe central (X), et une longueur axiale inférieure à un rayon de la cavité (3), et de préférence a une forme essentiellement cylindrique.

7. Procédé selon l'une quelconque des revendications 1 à 6, dans lequel le premier groupe d'ouvertures d'entrée inclut une pluralité de premières ouvertures (5), dans lequel le second groupe d'ouvertures d'entrée inclut une pluralité de secondes ouvertures (6), et dans lequel les premières ouvertures (5) et les secondes ouvertures (6) sont positionnées en alternance le long d'une direction longitudinale de la cavité (3).

8. Procédé selon l'une quelconque des revendications 5 à 7, dans lequel dans la première sous-étape de processus de garnissage (200a) et dans la seconde sous-étape de processus de garnissage (200b), toutes les premières ouvertures (5) sont régulées à la première pression et dans lequel toutes les secondes ouvertures (6) sont régulées à la seconde pression.

9. Isolant moulé par injection pour un appareillage de commutation isolé des gaz (20), l'isolant (20) comprenant une résine thermoplastique (4), dans lequel la résine thermoplastique (4) inclut au moins une ligne de soudure (21) dans une vue en section transversale de l'isolant (20), laquelle au moins une ligne de soudure (21) a une forme incurvée de telle sorte qu'un rapport d'une longueur (L) de la ligne de soudure (21) ayant un point de départ (A) et un point d'arrivée (B) au niveau de côtés respectifs de l'isolant (20) à une longueur (S) d'une ligne droite formée entre le point de départ (A) et le point d'arrivée (B) est d'au moins 1,3 et l'au moins une ligne de soudure (21) a une pluralité de courbes.

10. Isolant moulé par injection pour un appareillage de commutation isolé des gaz (20) selon la revendication 9, dans lequel la forme incurvée est telle que le rapport d'une longueur (L) de la ligne de soudure (21) ayant un point de départ (A) et un point d'arrivée (B) à une longueur (S) d'une ligne droite formée entre le point de départ (A) et le point d'arrivée (B) est d'au moins 1,5.

11. Isolant moulé par injection pour un appareillage de commutation isolé des gaz (20) selon la revendication 9 ou 10, dans lequel la résine thermoplastique (4) contient un matériau de renfort.

12. Isolant moulé par injection pour un appareillage de commutation isolé des gaz (20) selon la revendication 11, dans lequel le matériau de renfort est un matériau fibreux.
